# EUROPÄISCHE PATENTSCHRIFT

(11) **EP 3 508 293 B1**
(45) Veröffentlichungstag und Bekanntmachung des Hinweises auf die Patenterteilung: **30.09.2020**
(21) Anmeldenummer: 18150583.5
(22) Anmeldetag: 08.01.2018
(51) Int. Cl.: B23C 3/00, F16H 57/02, F16H 57/025, F16H 57/029, F16H 57/032, B23K 26/00

(54) **GEHÄUSEKOMPONENTE MIT MIKROSTRUKTURBESETZTEM FLANSCH**
HOUSING COMPONENT WITH MICROSTRUCTURED FLANGE
COMPOSANT DE BOÎTIER À BRIDE MICROSTRUCTURÉE

(43) Veröffentlichungstag der Anmeldung: 10.07.2019
(73) Patentinhaber: Flender GmbH, 46395 Bocholt (DE)
(72) Erfinder: VRIESEN, Dr. Johannes, 46399 Bocholt (DE); BÖING, Alfons, 46499 Hamminkeln (DE)
(74) Vertreter: Maier, Daniel Oliver

(56) Entgegenhaltungen:
- WO-A2-2010/005790
- DE-A1- 10 225 708
- US-B1- 6 253 640

## Beschreibung

Die Erfindung betrifft eine Gehäusekomponente mit einem mikrostrukturbesetzten Flansch und ein Verfahren zu dessen Herstellung. Die Erfindung betrifft auch ein Gehäuse mit einer solchen Gehäusekomponente und ein Planetengetriebe.

Aus US 2005/0075211 A1 ist ein Planetengetriebe bekannt, das einen Planetenradträger mit einer Mehrzahl an Planetenrädern umfasst. Die Planetenräder sind drehbar auf dem Planetenradträger aufgenommen und stehen im Eingriff mit einem Hohlrad. Die Planetenräder sind auf Planetenradachsen gelagert, die einen Schaft aufweisen, der in einer Wange des Planetenradträgers aufgenommen ist. Der Schaft ist im Wesentlichen zylindrisch ausgebildet. Der Durchmesser des Schafts ist unter Berücksichtigung der vorliegenden Materialeigenschaften und Mikrostrukturen derart ausgewählt, dass eine maximal zulässige von-Mises-Vergleichsspannung nicht überschritten wird.

Der Forschungsreport 2014 vom 11.12.2014 zum Projekt "Gestaltung und Ermittlung charakteristischer Kennwerte von reibschlussoptimierten Oberflächen", kurz GECKO, offenbart in Kapitel 4.4 eine Simulation von Mikrostrukturen, die im Wesentlichen messerförmig ausgebildet sind. Die messerförmigen Mikrostrukturen sind dabei in unterschiedlichen Simulationsdurchgängen in einer gegengerichteten und einer gekreuzten Riefenanordnung ausgerichtet. Ferner ist in Kapitel 5 ein Gestaltungsleitfaden für unbeschichtete reibschlüssige Oberflächen offenbart.

Das Dokument WO 2006/128523 A1 offenbart eine Anlaufscheibe eines Ausrücklagers einer Schalttrennkupplung mit einer kupplungsfernen Fläche. Die Anlaufscheibe ist aus Kunststoff hergestellt und weist auf ihrer kupplungsfernen Fläche Mikrostrukturen auf, die durch Anspritzen oder spanloses Einformen hergestellt sind. Die Mikrostrukturen sind rippenförmig ausgebildet und radial oder über die kupplungsferne Fläche hinweg kreuzförmig ausgerichtet.

Aus US 6 253 640 B1 ist ein Getriebe bekannt, das ein Gehäuse aus einer Mehrzahl an Gehäusekomponenten umfasst. Zumindest eine der Gehäusekomponenten weist eine umlaufende Flanschfläche auf, an der eine Mehrzahl an Bohrungen zur Aufnahme von Schrauben ausgebildet ist. Zur Herstellung der Flanschfläche wird diese mit einem Fräser bearbeitet, um so eine glatte Dichtfläche herzustellen. Des Weiteren sind am Rand der Flanschfläche Ausnehmungen ausgebildet, die bei der Fräsbearbeitung der Flanschfläche zu einem Halten der entsprechenden Gehäusekomponente ausgebildet ist.

Es besteht die Zielsetzung, höhere Drehmomente und Leistungen durch baulich kompaktere Getriebe zu führen und so die vorliegende Drehzahl anzupassen. Beispielsweise besteht im Bereich von Getrieben für Windenergieanlagen eine solche technische Zielsetzung. Eine derartige bauraumbezogene Leistungssteigerung stellt erhöhte Anforderungen an sämtliche Komponenten des Getriebes. Insbesondere besteht Bedarf an Gehäusekomponenten, die trotz steigender mechanischer Beanspruchung an ihren Flanschflächen zueinander fest sitzen, also keine oder nur eine reduzierte Relativbewegung zueinander aufweisen. Insgesamt besteht Bedarf an einer verbesserten Gehäusekomponente, die die skizzierten Anforderungen erfüllt und gleichzeitig einfach, schnell und wirtschaftlich herstellbar ist.

Die Aufgabenstellung wird durch die erfindungsgemäße Gehäusekomponente gelöst. Die Gehäusekomponente weist einen Flansch auf, der dazu ausgebildet ist, mit einer weiteren Gehäusekomponente eine reibschlüssige Flanschverbindung herzustellen. Der Flansch weist eine Stirnfläche auf, die im Wesentlichen als plane umlaufende Fläche ausgebildet ist. Der Flansch weist eine Mehrzahl an Ausnehmungen auf, die zur Aufnahme von lösbaren Befestigungselementen ausgebildet sind, wie beispielsweise Schrauben oder Bolzen. In einem ersten und einem zweiten Bereich auf der Stirnfläche des Flansches ist jeweils eine Mehrzahl an Mikrostrukturen ausgebildet. An Stellen, an denen Mikrostrukturen im ersten und/oder zweiten Bereich ausgebildet sind, liegt eine Erhöhung des lokalen Reibwerts vor. Der lokale Reibwert ist der Reibwert, der zusammen mit einer in der Flanschverbindung über die Befestigungselemente ausgeübten Haltekraft die Haftreibung definiert, die in der Ebene der Stirnfläche vorliegt. Die Mikrostrukturen weisen im Wesentlichen eine Messerform mit einer Schneidlinie auf. Durch diese Form rufen die Mikrostrukturen eine richtungsabhängige Erhöhung des lokalen Reibwerts hervor.

Die Schneidlinien der Mikrostrukturen sind erfindungsgemäß im ersten Bereich konzentrisch um einen ersten Lokalmittelpunkt angeordnet und ausgerichtet. Der erste Lokalmittelpunkt beschreibt einen Punkt, der auf der Stirnfläche des Flansches oder radial neben der Stirnfläche des Flansches liegt und der ein geometrisches Zentrum für eine Mehrzahl an Schneidlinien bildet. Gleichermaßen sind die Schneidlinien der Mikrostrukturen im zweiten Bereich konzentrisch um einen zweiten Lokalmittelpunkt angeordnet und ausgerichtet, der auch auf der Stirnfläche des Flansches liegt oder radial neben der Stirnfläche des Flansches. Bezogen auf einen Flanschmittelpunkt weisen der erste und der zweite Lokalmittelpunkt unterschiedliche Radialabstände auf. Infolgedessen weisen die Schneidlinien der Mikrostrukturen im ersten und zweiten Bereich bezogen auf eine Umrandung der Stirnfläche unterschiedliche Ausrichtungen auf.

Aufgrund der richtungsabhängigen Wirkung der Mikrostrukturen bei der Erhöhung des lokalen Reibwerts liegen so im ersten und zweiten Bereich unterschiedliche stark erhöhte lokale Reibwerte vor. Durch geeignetes Positionieren des ersten und zweiten Lokalmittelpunkts ist somit in wählbaren Abschnitten einer Flanschverbindung eine erhöhte Haftreibung erzielbar. Die erhöhte Haftreibung erlaubt es, in mechanisch hoch beanspruchten Abschnitten eine Relativbewegung der Gehäusekomponente in der Flanschverbindung zu verhindern. Gleichzeitig wird durch die so verbesserte Flanschverbindung auch eine verbesserte Dichtung am Flansch gewährleistet. Dies erlaubt die Herstellung einer belastbareren Flanschverbindung.

Bei der beanspruchten Gehäusekomponente können die Mikrostrukturen im ersten und/oder zweiten Bereich zumindest teilweise als Drehriefen ausgebildet sein, die von einem Fräser bei der Zerspanung einer metallischen Oberfläche hinterlassen werden. Drehriefen weisen senkrecht zu einer Stirnfläche eines Flansches Abmessungen von bis zu 100 µm auf und stellen damit Mikrostrukturen dar. Drehriefen bilden auch eine im Wesentlichen messerförmige Kontur und stellen eine einfache Art und Weise dar, die Mikrostrukturen herzustellen. Darüber hinaus bilden Drehriefen im Wesentlichen konzentrische Kreislinien. Die Stirnfläche des Flansches an der beanspruchten Gehäusekomponente ist folglich schnell und wirtschaftlich herstellbar. Alternativ oder ergänzend können die Mikrostrukturen im ersten und/oder zweiten Bereich durch eine Laserbearbeitung der Stirnfläche des Flansches hergestellt sein. Mittels Laserbearbeitung hergestellte Mikrostrukturen sind frei von geometrischen Zwängen herstellbar. Dadurch können Mikrostrukturen an Positionen und in Ausrichtungen herstellt werden, die für einen Fräser, der Drehriefen erzeugt, nicht erreichbar sind.

Bevorzugt ist die Messerform der Mikrostrukturen derart ausgebildet, dass die Mikrostrukturen einen im Wesentlichen dreieckigen Querschnitt aufweisen. Ein dreieckiger Querschnitt stellt die einfachste Form dar, die eine Mikrostruktur mit einer definierten Schneidlinien liefert. Die Schneidlinie stellt einen linienförmigen Kontakt dar, der eine erhöhte Hertz'sche Pressung, und damit eine erhöhte Haftreibung hervorruft. Alternativ oder ergänzend können die Mikrostrukturen auch einen trapezförmigen oder trapezoidförmigen Querschnitt aufweisen. Bei einer Stirnfläche, die aus einem härteren Material hergestellt ist als ein Gegenkörper für die Flanschverbindung, besteht bei einem trapezförmigen oder trapezoidförmigen Querschnitt ein reduziertes Risiko, dass Materialpartikel aus der Stirnfläche abbrechen und so eine Reibschwingkorrosion hervorrufen. Dabei bieten trapezförmige und trapezoidförmige auf ihrer Oberseite einen schmalen Flächenkontakt, der ähnlich hohe Haftreibung bietet wie ein dreieckiger Querschnitt. Dreieckige, trapezförmige und trapezoidförmige Querschnitte der Mikrostrukuren bieten eine definierte richtungsabhängige Erhöhung des lokalen Reibwerts.

Des Weiteren können in der beanspruchten Gehäusekomponente die Schneidlinien der Mikrostrukturen im ersten und/oder zweiten Bereich im Wesentlichen quer zu einer Ausrichtung einer mechanischen Spannung an der Stirnfläche des Flansches ausgerichtet sein. Die Ausrichtung kann dabei auf eine Hauptspannungsachse eines überlagerten Spannungszustands an der entsprechenden Stelle im ersten und/oder zweiten Bereich bezogen sein. AlternaLiv kann die Ausrichtung der Schneidlinien der Mikrostrukturen auch auf eine entsprechend ausgerichtete und gewählte Vergleichsspannung, beispielsweise einer von-Mises-Spannung, also einer Spannung gemäß der Gestaltänderungshypothese, einer Tresca, Coulomb-, Saint-Venant-, oder Guest-Spannung bezogen sein, die auf der Schubspannungshypothese beruhen. Ebenso kann die Ausrichtung der Schneidlinien der Mikrostrukturen auch auf eine Rankine-Spannung bezogen sein, die auf der Hauptnormalspannungshypothese basierL. In analoger Form sind auch andere Vergleichsspannungen gemäß den bekannten Hypothesen möglich. Derartige Spannungen und/oder Vergleichsspannungen sind in einfacher Weise durch heutige Konstruktionsprogramme, insbesondere CAD- und FEM-Programme, schnell und hochauflösend berechenbar. Eine entsprechende geeignete Ausrichtung der Mikrostrukturen, bei der eine maximale Erhöhung des lokalen Reibwerts erzielt wird, kann damit im ersten und/oder zweiten Bereich gezielt hergestellt werden. Die beanspruchte Gehäusekomponente ist somit effektiv an unterschiedliche Anforderungen konstruktiv anpassbar.

Vorzugsweise ist die mechanische Spannung, zu der die Schneidlinien der Mikrostrukturen im Wesentlichen quer ausgerichtet sind, die vorliegende Schubspannung. Dabei handelt es sich um die Schubspannungen, die sind im angepressten Zustand bei einer Flanschverbindung zwischen den beteiligten Flanschen im bestimmungsgemäßen Betrieb, beispielsweise bei einem Getriebe, insbesondere einem Planetengetriebe, einstellt. Die Schneidlinien der Mikrostrukturen schneiden sich damit zumindest abschnittsweise mit der Richtung, die die Schubspannung im Bereich dieser Mikrostrukturen, beispielsweise in einem Zwischenraum zwischen zwei Mikrostrukturen, einnimmt. Schubspannungen ergeben sich über den Mohr'schen Spannungskreis algebraisch aus zwei vorliegenden Spannungen. Schubspannungen sind durch heutige Konstruktionsprogramme, also CAD- und FEM-Programme, sehr einfach und schnell berechenbar. Der Erfindung liegt unter anderem die Erkenntnis zugrunde, dass im Bereich erhöhter Schubspannungen in einer Flanschverbindung die stärkste Neigung besteht, von einem Haftreibungszustand in einen Gleitreibungszustand überzugehen. Folglich sind die Bereiche, in denen ein Verlust der Haftreibung, und damit des festen Sitzes der Gehäusekomponente, im bestimmungsgemäßen Betrieb am stärksten drohen, durch Heranziehung der vorliegenden Schubspannung als Kriterium besonders schnell identifizierbar. Deshalb wird durch die Mikrostrukturen nur mittels einer Bearbeitung eines begrenzten Bereichs auf der Stirnfläche des Flansches der gesamte Flansch stabiler gestaltet.

In einer weiteren Ausführungsform der beanspruchten Gehäusekomponente sind die Mikrostrukturen im ersten und/oder zweiten Bereich angeordnet, wobei im ersten und/oder zweiten Bereich eine maximale mechanische Spannung vorliegt, die höher ist als ein wählbarer, also einstellbarer, Schwellenwert. Der Schwellenwert ist durch eine Benutzereingabe oder durch einen Algorithmus eines Konstruktionsprogramms einstellbar. Durch den wählbaren Schwellenwert sind gezielt Bereiche als erster und/oder zweiter Bereich festlegbar, in denen Mikrostrukturen auszubilden sind. Dies gewährleistet, jeglichen Bereich, in dem bei bestimmungsgemäßer mechanischer Beanspruchung des Flansches mittels Mikrostrukturen gegen eine Gleitbewegung in der Flanschverbindung stützbar, also verstärkbar. Durch geeignete Wahl des Schwellenwerts ist es möglich, gezielt die Bereiche zu identifizieren, in denen eine Mikrostruktur eine Erhöhung der vorliegenden Haftreibung hervorruft. Der Aufwand zur Herstellung der Mikrostrukturen wird somit auf ein Minimum reduziert, so dass die beanspruchte Gehäusekomponente schnell und wirtschaftlich herstellbar ist.

In einer bevorzugten Ausführungsform der beanspruchten Gehäusekomponente liegen der erste und/oder zweite Bereich an einem Übergang zu einer Drehmomentstütze. Die Drehmomentstütze ist dabei vorzugsweise einstückig an die Gehäusekomponente angeformt, beispielsweise integral durch Gießen hergestellt. An der Drehmomentstütze ist zumindest teilweise die Gewichtskraft der Gehäusekomponente und beispielsweise des darin befindlichen Getriebes aufgenommen. Ferner wird bei einem Planetengetriebe durch umlaufende Planetenräder eine Verformungslast auf dessen Hohlrad, und darüber auf die zugehörige Gehäusekomponente übertragen. Zusätzlich tritt am Übergang zu einer Drehmomentstütze in der Gehäusekomponente eine Zu- bzw. Abnahme an Steifigkeit auf. Die Kombination aus dieser Steifigkeitsänderung, der periodisch umlaufenden Verformungslast und der statischen Gewichtskraft führt zu erhöhten mechanischen Spannungen, insbesondere Schubspannungen, am Übergang zu einer Drehmomentstütze. Infolgedessen werden die oben skizzierten Vorteile der beanspruchten Gehäusekomponente am Übergang zu einer Drehmomentstütze in besonderem Umfang erzielt.

Die skizzierte Aufgabenstellung wird auch durch das erfindungsgemäße Verfahren zur Herstellung einer Gehäusekomponente gelöst. Die Gehäusekomponente verfügt über einen Flansch mit einer Stirnfläche. Der Flansch ist dazu ausgebildet, mit einem Flansch einer weiteren Gehäusekomponente eine reibschlüssige Verbindung, also eine Flanschverbindung, herzustellen. Das erfindungsgemäße Verfahren umfasst eine Mehrzahl an Schritten. In einem ersten Verfahrensschritt wird eine Gehäusekomponente bereitgestellt, wobei die Stirnfläche eines Flansches spanend zu bearbeiten ist. In einem weiteren Schritt wird ein Fräser relativ zur Gehäusekomponente positioniert. Eine Fräserachse, um die sich der Fräser im Betrieb dreht, ist dabei im Wesentlichen senkrecht zur Stirnfläche ausgerichtet. Der Fräser wird derart positioniert, dass die Fräserachse durch einen ersten Lokalmittelpunkt verläuft. In einem weiteren Schritt erfolgt eine spanende Bearbeitung der Stirnfläche des Flansches mit dem Fräser. Bei der spanenden Bearbeitung durch den Fraser werden auf der Stirnfläche des Fräsers Mikrostrukturen in Form von Drehriefen erzeugt. In einem weiteren Schritt erfolgt ein Bewegen des Fräsers vom ersten Lokalmittelpunkt zu einem zweiten Lokalmittelpunkt. Während des Bewegens von ersten zum zweiten Lokalmittelpunkt erfolgt weiterhin eine spanende Bearbeitung der Stirnfläche des Flansches. Bezogen auf eine Bewegungsrichtung des Fräsers werden die Mikrostrukturen an einem hinteren Abschnitt des Fräsers erzeugt. Erfindungsgemäß umfasst die Bewegung des Fräsers eine Bewegung in einer Umfangsbearbeitungsrichtung und eine Bewegung in einer Radialbearbeitungsrichtung. Die Umfangsbearbeitungsrichtung folgt dabei im Wesentlichen der Stirnfläche. Die Radialbearbeitungsrichtung ist auf einen Flanschmittelpunkt bezogen, um den herum die Stirnfläche verläuft.

Das erfindungsgemäße Verfahren erlaubt es, in einfacher Weise Mikrostrukturen auf einer Stirnfläche eines Flansches herzustellen. Insbesondere erfolgt die Herstellung lediglich mit Werkzeug, das beispielsweise in der Getriebefertigung ohnehin zum Einsatz kommt. Die Verwendung von Spezialwerkzeug ist somit entbehrlich. Durch die entsprechende Ansteuerung des Fräsers ist es einfach möglich, die Position und die Ausrichtung der Mikrostrukturen gezielt einzustellen. Dies erlaubt es insgesamt, eine mechanisch stärker beanspruchbare Gehäusekomponente herzustellen.

In einer bevorzugten Ausführungsform des beanspruchten Verfahrens weist der Fräser einen Fräserdurchmesser auf, der eine Flanschbreite, also eine radiale Abmessung der Stirnfläche des Flansches, übersteigt. Dadurch sind über die gesamte Flanschbreite Mikrostrukturen herstellbar, die Stirnfläche bogenförmig bis annähernd geradlinig überqueren. Mit einem derartigen Fräser sind auf einer Fläche annähernd konstante Mikrostrukturen herstellbar, wodurch in einem Segment der Stirnfläche durchgehend eine gleichartige richtungsabhängige Erhöhung des lokalen Reibwerts erzielbar ist. Insbesondere ist eine schnelle spanende Bearbeitung der Stirnfläche möglich.

Des Weiteren kann im beanspruchten Herstellungsverfahren der erste und/oder zweite Lokalmittelpunkt radial außerhalb der Stirnfläche des Flansches liegen. Dadurch ist es möglich, beispielsweise bei Verwendung von Fräsern mit erhöhtem Durchmesser, die Krümmung der Schneidlinien der herzustellenden Mikrostrukturen auf der Stirnfläche exakt einzustellen. Insbesondere sind am Rand der Stirnfläche reduzierte Krümmungen der Schneidlinien der Mikrostrukturen erzielbar. Hierdurch ist mit dem beanspruchten Verfahren eine erhöhte konstruktive Freiheit bei der Gestaltung der Mikrostrukturen erzielbar, und somit die gewünschte lokale Erhöhung des Reibwerts exakter einstellbar.

Gleichermaßen wird die beschriebene Aufgabenstellung durch das erfindungsgemäße Gehäuse gelöst. Das Gehäuse dient der Aufnahme einer mechanischen oder elektromechanischen Anwendung, beispielsweise für ein Getriebe oder einen Elektromotor. Im Gehäuse sind Bauteile der mechanischen oder elektromechanischen Anwendung angeordnet, die sich zumindest teilweise im bestimmungsgemäßen Betrieb am Gehäuse abstützen. Das Gehäuse umfasst eine erste und eine zweite Gehäusekomponente, die jeweils einen Flansch mit einer Stirnfläche aufweisen. Die erste und zweite Gehäusekomponente sind über Befestigungsmittel, beispielsweise Schrauben oder Bolzen, lösbar miteinander reibschlüssig verbunden und bilden eine Flanschverbindung. Erfindungsgemäß sind die erste und/oder die zweite Gehäusekomponente gemäß mindestens einer der oben beschriebenen Ausführungsformen ausgebildet. Ein derartiges Gehäuse bietet in der Flanschverbindung eine erhöhte Haftreibung, so dass das Gehäuse dazu geeignet ist, bei gleichbleibender Baugröße erhöhte Stützkräfte von Bauteilen der mechanischen oder elektromechanischen Anwendung und/oder Lagerreaktionskräfte aufzunehmen. Gleichzeitig wird in der Flanschverbindung die Dichtwirkung gesteigert. Ferner ist die mindestens eine erfindungsgemäß ausgebildete Gehäusekomponente dabei einfach und wirtschaftlich herstellbar.

Vorzugsweise sind im beanspruchten Gehäuse die Mikrostrukturen derart ausgebildet, dass Schneidlinien der Mikrostrukturen auf den Stirnflächen der Flansche der ersten und zweiten Gehäusekomponente zueinander im Wesentlichen parallel angeordnet sind. Der Bereich, in dem die Schneidlinien der Mikrostrukturen parallel zueinander ausgebildet sind, bildet somit einen Verstärkungsbereich. Parallel angeordnete Schneidlinien von Mikrostrukturen erlauben einen wechselseitigen Formschluss, durch den eine weitere richtungsabhängige Erhöhung des lokalen Reibwerts erzielt wird. Ein solcher Verstärkungsbereich bietet ein besonders hohes Maß an Haftreibung an Stellen, wo beispielsweise eine erhöhte mechanische Spannung, insbesondere Schubspannung, oder Vergleichsspannung vorliegt. Insgesamt werden die technischen Vorteile der beanspruchten Gehäusekomponente so im Zusammenspiel mit einer weiteren gleich oder ähnlich ausgebildeten Gehäusekomponente in besonders hohem Umfang erzielt.

Ferner kann im beanspruchten Gehäuse die erste Gehäusekomponente aus einem härten Werkstoff hergestellt sein als die zweite Gehäusekomponente. Die Mikrostrukturen auf der Stirnfläche des Flansches der ersten Gehäusekomponente weisen dabei eine höhere Rauigkeit auf als die Mikrostrukturen auf der Stirnfläche des Flansches der zweiten Gehäusekomponente. Eine höhere Rauigkeit wird hierbei durch eine höhere Abmessung der Mikrostrukturen senkrecht zur entsprechenden Stirnfläche hervorgerufen. Eine solche Zusammenstellung einer ersten Gehäusekomponente mit härteren und raueren Mikrostrukturen als auf der Stirnfläche der zweiten Gehäusekomponente stellt eine besonders vorteilhafte Zusammenstellung dar, die die angestrebten Vorteile der Erfindung in besonderem Umfang verwirklichen.

Die beschriebene Aufgabe wird auch durch das erfindungsgemäße Planetengetriebe gelöst. Das Planetengetriebe umfasst ein Gehäuse, zu dem zumindest eine erste Gehäusekomponente gehört. In der ersten Gehäusekomponente ist ein Hohlrad aufgenommen, in dem im bestimmungsgemäßen Betrieb mindestens ein Planetenrad läuft. Dazu ist das Planetenrad drehbar in einem Planetenradträger gelagert. Durch das Planetenrad werden im Hohlrad Reaktionskräfte hervorgerufen, die mit dem Planetenrad umlaufen. Die Reaktionskräfte werden wiederum von Hohlrad an die erste Gehäusekomponente weitergeleitet. Erfindungsgemäß ist die erste Gehäusekomponente gemäß einer der oben beschriebenen Ausführungsformen ausgebildet. Ein derartiges Planetengetriebe bietet die Möglichkeit, bei erhöhten Drehmomenten die vorliegende Drehzahl anzupassen. In einem Planetengetriebe werden die technischen Vorteile der erfindungsgemäßen Gehäusekomponente erzielt.

Gleichermaßen wird die skizzierte Aufgabenstellung durch eine erfindungsgemäße Windenergieanlage erzielt. Die Windenergieanlage umfasst einen Rotor, der mit einer Gondel verbunden ist. Der Rotor ist auch über ein Getriebe mit einem Generator verbunden. Die vom Rotor gelieferte Wellenleistung wird durch das Getriebe erhöht und dem Generator so eine erhöhte Drehzahl für die Energiegewinnung zur Verfügung gestellt. Das Getriebe ist dabei als Planetengetriebe gemäß einer oben skizzierten Ausführungsform ausgebildet. Das Planetengetriebe bietet bei gleicher Baugröße eine erhöhte Leistungsdichte, also ein höheres Verhältnis von umgesetzter Wellenleistung zu Bauvolumen. Hierdurch ist ein kompakterer Aufbau der Komponenten in der Gondel möglich.

Die Erfindung wird im Folgenden anhand von Figuren einzelner Ausführungsformen beschrieben. Die Merkmale der Figuren sind dabei ohne weiteres untereinander kombinierbar. Es zeigen im Einzelnen:
- FIG 1: schematisch eine Stirnfläche eines Flansches an einer Gehäusekomponente gemäß einer ersten Ausführungsform der Erfindung;
- FIG 2-4: eine Mehrzahl aus Ausführungsformen einer Mikrostruktur;
- FIG 5: schematisch eine Stirnfläche eines Flansches an einer Gehäusekomponente gemäß einer zweiten Ausführungsform der Erfindung;
- FIG 6: einen Ausschnitt einer Ausführungsform eines erfindungsgemäßen Gehäuses;
- FIG 7: schematisch ein Ablaufdiagramm einer Ausführungsform des erfindungsgemäßen Herstellungsverfahrens;

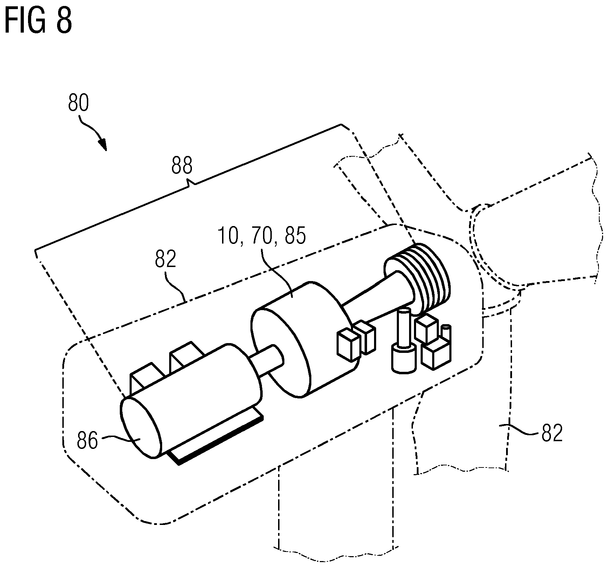

- FIG 8: eine Ausführungsform einer erfindungsgemäßen Windenergieanlage.

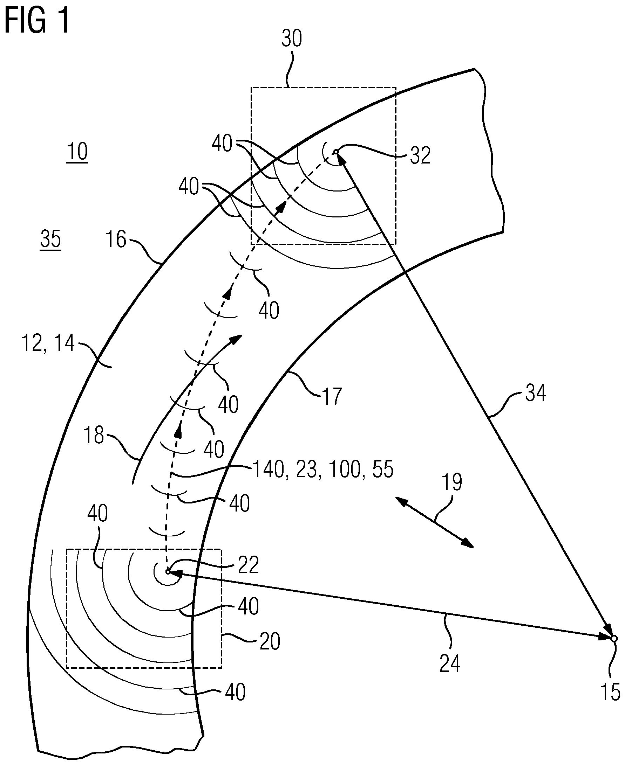

In FIG 1 ist schematisch eine Stirnfläche 14 eines Flansches 12 einer nicht näher dargestellten Gehäusekomponente 10 abgebildet. Die Stirnfläche 14 ist umlaufend ausgebildet und umrundet einmal den Flanschmittelpunkt 15. Die Stirnfläche 14, also der Flansch 12 ist ringförmig ausgebildet und dient dazu, mit einem weiteren Flansch eine reibschlüssige und dichte Flanschverbindung 35 herzustellen. Auf der Stirnfläche 14 ist ein einem ersten Bereich 20 eine Mehrzahl an Mikrostrukturen 40 ausgebildet. Die Mikrostrukturen 40 sind gekrümmt ausgebildet und sind zueinander konzentrisch angeordnet. Die Mikrostrukturen 40 im ersten Bereich 20 sind um einen ersten Lokalmittelpunkt 22 gruppiert positioniert und sind zum ersten Lokalmittelpunkt 22 konzentrisch angeordnet. Der erste Lokalmittelpunkt 22 liegt in FIG 1 auf oder über der Stirnfläche 14 des Flansches 12. Die Mikrostrukturen 40 sind entgegen einer Umfangsbearbeitungsrichtung 18 der Stirnfläche 14 gesehen, konvex ausgebildet. Insgesamt bilden die Mikrostrukturen 40 eine Sichelschar. Der erste Lokalmittelpunkt 22 weist von Flanschmittelpunkt 15 einen ersten Radialabstand 24 auf. Durch die im Wesentlichen konzentrische Anordnung der Mikrostrukturen 40 um den ersten Lokalmittelpunkt 22 ist der erste Radialabstand 24 charakteristisch für die Form und Ausrichtung der Mikrostrukturen 40.

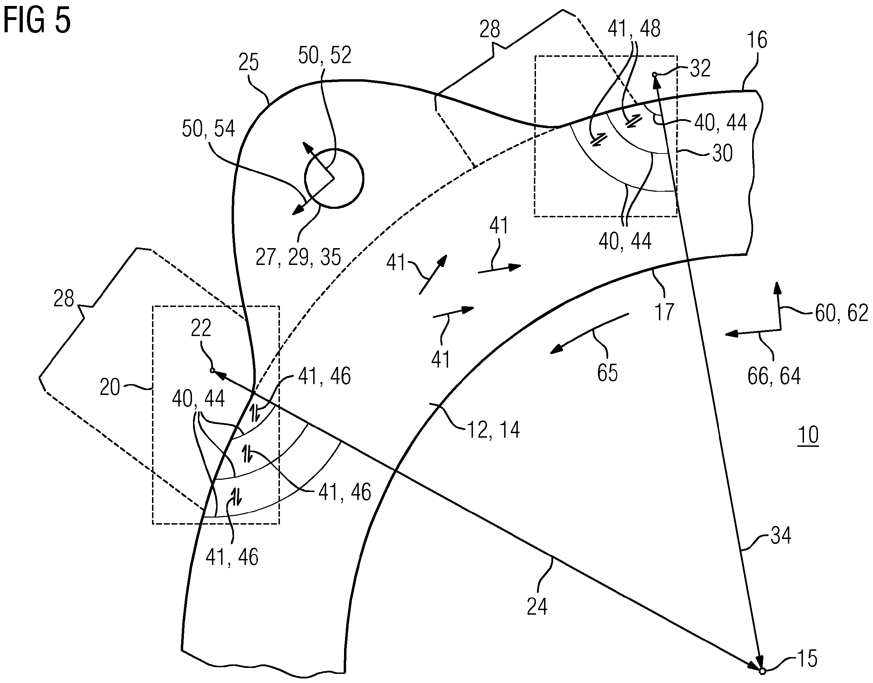

Auf der Stirnfläche 14 ist in einem zweiten Bereich 30 auch eine Mehrzahl an Mikrostrukturen 40 ausgebildet, die auch zueinander konzentrisch angeordnet sind. Entgegen der Umfangsbearbeitungsrichtung 18 der Stirnfläche 14 sind die Mikrostrukturen 40 im zweiten Bereich 30 konvex ausgebildet. Die Mikrostrukturen 40 im zweiten Bereich 30 sind konzentrisch um einen zweiten Lokalmittelpunk 32 angeordnet. Der zweite Lokalmittelpunkt 32 liegt über oder auf der Stirnfläche 14 und weist zum Flanschmittelpunkt 15 einen zweiten Radialabstand 34 auf. Der erste Radialabstand 24 und der zweite Radialabstand 34 sind dem Betrag nach unterschiedlich groß. Dadurch liegt für die Mikrostrukturen 40 im ersten und zweiten Bereich 20, 30 eine unterschiedliche Ausrichtung bezogen auf einen Außenrand 16 und einen Innenrand 17 des Flansches 12 vor. Zwischen dem ersten und zweiten Lokalmittelpunkt 22, 32 liegt ein Bearbeitungspfad 23, der die Lokalmittelpunkt 22, 32 verbindet. Entlang des Bearbeitungspfades 23 sind weitere Mikrostrukturen 40 ausgebildet, die eine Sichelform aufweisen und den Bearbeitungspfad 23 im Wesentlichen senkrecht schneiden. Der Bearbeitungspfad 23 wird bei einem Herstellungsverfahren 100, wie beispielsweise in FIG 5 abgebildet, in einem vierten Schritt 140 von einem nicht näher abgebildeten Fräser 55 abgefahren. Die Bewegung entlang des Bearbeitungspfads 23 umfasst eine Umfangsbearbeitungsrichtung 18 und eine Radialbearbeitungsrichtung 19.

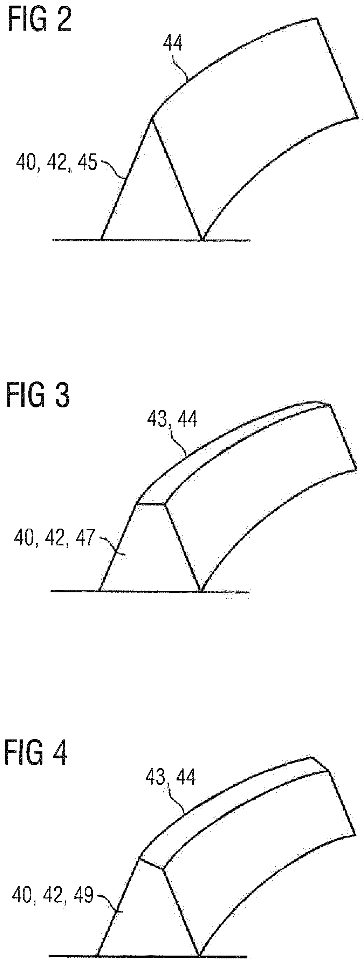

Eine Mehrzahl an Profilen von Mikrostrukturen 40, mit denen die erfindungsgemäße Gehäusekomponente 10 verwirklichbar ist, ist in FIG 2 bis FIG 4 abgebildet. FIG 2 zeigt eine Mikrostruktur 40, die einen dreieckigen Querschnitt 45 aufweist, wobei eine Spitze des Dreiecks eine Schneidlinie 44 ausbildet. Infolgedessen hat die Mikrostruktur 40 mit dem dreieckigen Querschnitt 45 eine Messerform 42. Die Schneidlinie 44 stellt bei einem Kontakt mit einer anderen Oberfläche einen Linienkontakt dar, an dem eine erhöhte Hertz'sche Pressung vorliegt. Dies gewährleistet ein hohes Maß an Dichtigkeit. Die Mikrostruktur 40 ist gekrümmt ausgebildet, so dass die Schneidlinie 44 eine Kurve bzw. eine Sichelform aufweist.

FIG 3 zeigt eine Mikrostruktur 40, die eine Messerform 42 mit einem trapezförmigen Querschnitt 47 aufweist. Aufgrund der Größendimensionen kann eine Oberseite 43 einer Mikrostruktur 40 auch als Schneidlinie 44 betrachtet werden. Die Oberseite 43 ist dazu ausgebildet, mit einem nicht näher dargestellten Gegenkörper einen Flächenkontakt auszubilden. Die Hertz'sche Pressung in einem Flächenkontakt ist schwächer als in einem Linienkontakt. Infolgedessen besteht eine verringerte Gefahr, dass aus der Mikrostruktur 40 bei einer Belastung und anschließender Entlastung Partikel herausbrechen, die zu einer Reibschwingkorrosion führen können

Des Weiteren zeigt FIG 4 eine Mikrostruktur 40 mit einem trapezoidförmigen Querschnitt 49, wodurch auch eine Messerform 42 verwirklicht ist. Der trapezoidförmige Querschnitt 49 weist eine geneigte Oberseite 43 auf. Eine Umrandung der Oberseite 43 bildet hierbei eine Schneidlinie 44. Der trapezoidförmige Querschnitt 49 stellt eine Übergangsform zwischen dem dreieckigen Querschnitt 45 und dem trapezförmigen Querschnitt 47 dar. In Mikrostrukturen 40, die wie in FIG 1 und 3 dargestellt, flächig verteilt liegen, liegen alle drei Querschnittsformen 45, 47, 49 vor. Durch plastische Verformung werden auch beispielsweise Mikrostrukturen 40 mit dreieckigem Querschnitt 45 in Mikrostrukturen 40 mit trapezförmigem oder trapezoidförmigem Querschnitt 47, 49 umgewandelt.

In FIG 5 ist ein Flansch 12 mit seiner Stirnfläche 14 gemäß einer zweiten Ausführungsform der erfindungsgemäßen Gehäusekomponente 10 dargestellt. Die Stirnfläche 14 umläuft einen Flanschmittelpunkt 15 und weist einen Außenrand 16 und einen Innenrand 17 auf. Am Außenrand 16 ist eine Drehmomentstütze 25 ausgebildet. Die Drehmomentstütze 25 ist im Wesentlichen laschenförmig und verfügt über eine Ausnehmung 27 zur Aufnahme eines Befestigungsmittels, beispielsweise eines Haltebolzens 29. Die Gehäusekomponente 10 ist zumindest über die Drehmomentstütze 25 gelagert, so über die Ausnehmung 27 Lagerreaktionskräfte 50 in die Gehäusekomponente 10 eingeleitet werden. Die Lagerreaktionskräfte 50 umfassen eine Radialkraft 52 und eine Tangentialkraft 54. Die Gehäusekomponente 10 ist ferner durch eingebaute Getriebekomponente einer umlaufenden dynamischen Belastung 60 unterworfen. Die dynamische Belastung 60 umfasst dynamische Radialkraft 62 und eine dynamische Tangentialkraft 64. Deren Umlauf im Betrieb ist durch den Pfeil 65 abgebildet. Aus einem Zusammenspiel der Lagerreaktionskräfte 50 und der dynamischen Belastung 60 ergibt sich in der Stirnfläche 14 des Flansches 12 eine zeitlich veränderliche Verteilung von mechanischen Spannungen.

An einem Übergang 28 zur Drehmomentstütze 25 liegt ein erster Bereich 20, in dem eine Mehrzahl an Mikrostrukturen 40 angeordnet ist. Der Übergang 28 und der erste Bereich 20 überlappen sich dabei zumindest teilweise. Die Mikrostrukturen 40 im ersten Bereich 20 weisen im Wesentlichen eine Sichelform auf und sind konzentrisch um einen ersten Lokalmittelpunkt 22 angeordnet. Der Lokalmittelpunkt 22 liegt radial außerhalb der Stirnfläche 14 und bestimmt durch seine Positionierung die Ausrichtung der zugehörigen Mikrostrukturen 40. Im ersten Bereich 20 liegen auch maximale mechanische Spannungen 41 vor, die als Schubspannungen 46 ausgebildet sind. Die Ausrichtung der Schubspannungen 46 ist durch gegenläufige Pfeilpaare dargestellt. Schneidlinien 44 der Mikrostrukturen 40 sind derart ausgerichtet, dass sie im Wesentlichen quer zu den Schubspannungen 46 liegen. Hierdurch wird im ersten Bereich 20 der vorliegende Reibwert richtungsabhängig gesteigert, und so eine erhöhte Haftreibung im ersten Bereich 20 erzeugt. Einem Gleiten der ersten Gehäusekomponente 10 in einer Flanschverbindung 35 wird so vorgebeugt. Die Schubspannungen 46 bzw. der Ort deren Maximums, stellen für die mechanische Beanspruchung im ersten Bereich die aussagekräftigste physikalische Größe in puncto Haftreibung bzw. Gleitneigung dar. Die vorliegende Schubspannung 46 ist für die Stirnfläche 14 des Flansches 12 in einfacher Weise mit einem Konstruktionsprogramm, also einem CAD- oder FEM-Programm, ermittelbar.

Gleichermaßen sind in einem zweiten Bereich 30 Mikrostrukturen 40 angeordnet, die derart ausgerichtet sind, dass deren Schneidlinien 44 im Wesentlichen quer zu einer Vergleichsspannung 41 liegen, die durch die dort vorliegenden mechanischen Spannungen 41 hervorgerufen wird. Die Vergleichsspannung 48 sind basierend auf den Daten eines Konstruktionsprogramms, beispielsweise eines FEM-Programms, über eine auswählbare Ausprägung der Schubspannungshypothese, der Gestaltänderungshypothese, oder einer weiteren Vergleichsspannungstheorie ermittelbar. Die Vergleichsspannung 48 ist im zweiten Bereich 30 derart gewählt, dass die Vergleichsspannung 48 für die im zweiten Bereich 30 vorliegende mechanische Beanspruchung für die vorliegende Haftreibung bzw. Gleitneigung am aussagekräftigsten ist. Die Ausrichtung der Schneidlinien 44 der Mikrostrukturen 40 im zweiten Bereich 30 ist durch die Positionierung eines zweiten Lokalmittelpunkts 32 bestimmt, der in FIG 3 radial außerhalb der Stirnfläche 14 liegt. Ein Radialabstand 34 des zweiten Lokalmittelpunkts 32 unterscheidet sind dabei vom Radialabstand 24 des ersten Lokalmittelpunkts 22.

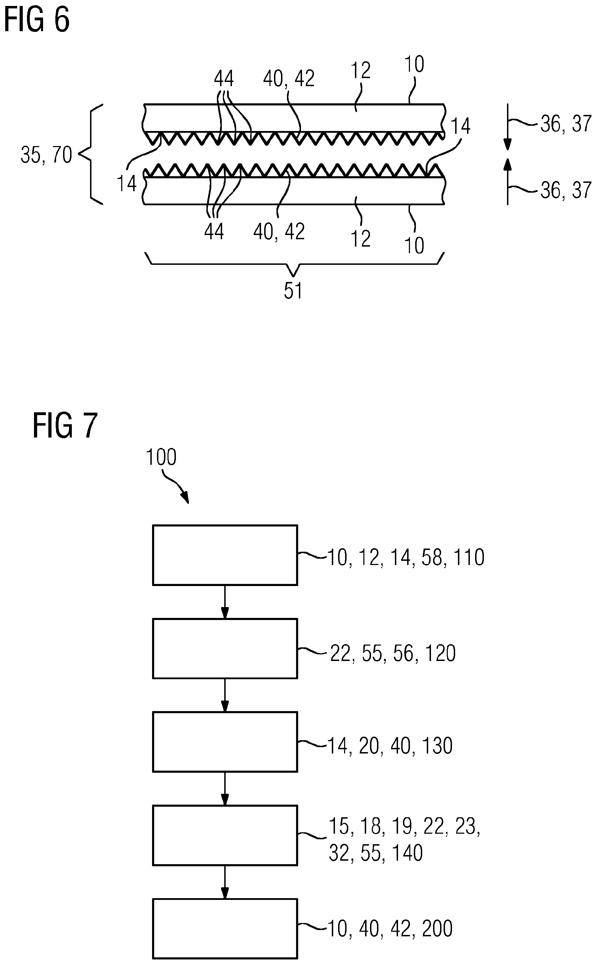

Eine ausschnitthaft eine Ausführungsform eines Gehäuses 70 ist in FIG 6 dargestellt, in den Gehäusekomponenten 10 über eine Flanschverbindnung 35 reibschlüssig miteinander zu koppeln sind. Die Gehäusekomponenten 10 werden bei einer Montage über eine Haltekraft 36 an ihren Flanschen 12 aneinander gedrückt. Die Haltekraft 36 wird über nicht näher dargestellte Befestigungsmittel 37, die als Schrauben ausgebildet sind, ausgeübt. An den Stirnflächen 14 der Flansche 12 sind Mikrostrukturen 40 angeordnet, die eine Messerform 42 aufweisen. Die Schneidlinien 44 der Messerform 42 sind derart ausgerichtet, dass die Schneidlinien 44 der Mikrostrukturen 40 der beiden Gehäusekomponenten 10 zueinander parallel ausgerichtet sind. Bei einem Ineinandergreifen der Mikrostrukturen 40 bilden die Schneidlinien 44 jeweils an den Mikrostrukturen 40 einen Formschluss aus. Hierdurch wird eine erhebliche Erhöhung des Reibwerts an der entsprechenden Stelle erzielt. Hierdurch wird ein Verstärkungsbereich 51 gebildet.

In FIG 7 ist schematisch ein Ablaut einer Ausführungsform des erfindungsgemäßen Herstellungsverfahrens 100 für eine Gehäusekomponente 10 dargestellt. Die Gehäusekomponente 10 liegt dabei zunächst als Rohteil vor, das einen Flansch 12 mit einer Stirnfläche 14 aufweist, die durch spanende Bearbeitung zu bearbeiten ist. In einem ersten Schritt 110 wird die Gehäusekomponente 10 mit dem Flansch 12 mit der Stirnfläche 14 bereitgestellt und in eine nicht näher dargestellte entsprechende Bearbeitungsmaschine 58, beispielsweise einer Fräsmaschine, eingespannt. In einem darauffolgenden zweiten Schritt 120 wird ein Fräser 55 an einem ersten Lokalmittelpunkt 22 positioniert. Dabei steht eine Fräserachse 56, um die der Fräser 55 bei der Bearbeitung rotiert, im Wesentlichen senkrecht zur Stirnfläche 14. Es folgt ein dritter Schritt 130, in dem ein spannendes Bearbeiten der der Stirnfläche 14 erfolgt, bei dem Mikrostrukturen 40 auf der Stirnfläche 14 in einem ersten Bereich 20 erzeugt werden. Der erste Bereich 20 ist die unmittelbare Umgebung des Lokalmittelpunkts 22. In einem vierten Schritt 140 erfolgt ein Bewegen des Fräsers 55 von ersten Lokalmittelpunkt 22 zu einem zweiten Lokalmittelpunkt 32. Während der Bewegung zum zweiten Lokalmittelpunkt 32 bleibt der Fräser 55 in Kontakt mit der Stirnfläche 14, so dass die im dritten Schritt 130 aufgenommene spanende Bearbeitung der Stirnfläche 14 fortgesetzt wird. Durch das Bewegen des Fräsers 55 werden so im Wesentlichen sichelförmige Drehriefen auf der Stirnfläche 14 erzeugt, die als Mikrostrukturen 40 zur lokalen Erhöhung eines Reibwertes dienen. Drehriefen bilden Mikrostrukturen aus, die im Wesentlichen eine Messerform 42 ausweisen, und so zur richtungsabhängigen Erhöhung eines lokalen Reibwerts geeignet sind. Beim Bewegen vom ersten zum zweiten Lokalmittelpunkt 22, 32 folgt der Fräser einem vorgegebenen Bearbeitungspfad 23. Die Bewegung des Fräsers 55 umfasst auf dem Bearbeitungspfad 23 eine Umfangsbearbeitungsrichtung 18 und eine Radialbearbeitungsrichtung 19. Infolgedessen ist die Ausrichtung der erzeugten Mikrostrukturen 40 einstellbar. Es folgt ein Endzustand 200, in dem eine Gehäusekomponente 10 vorliegt, die auf ihrer Stirnfläche 14 mit Mikrostrukturen 40 besetzt ist, die im Wesentlichen eine Messerform 42 autweisen und sichelförmig konzentrisch um Lokalmittelpunkte 22, 32 angeordnet sind.

Darüber hinaus zeigt FIG 6 eine Ausführungsform einer erfindungsmäßen Windenergieanlage 80, die über einen luvseitig angeordneten Rotor 82 verfügt. Der Rotor 82 ist drehmomentübertragend mit einem Getriebe 85 gekoppelt, das als Planetengetriebe ausgebildet ist. Das Getriebe 85 wiederum ist drehmomentübertragend mit einem Generator 86 verbunden, der zur Erzeugung elektrischer Energie ausgebildet ist. Das Getriebe 85 und der Generator sind in einer Gondel 84 aufgenommen und gehören zu einem Antriebsstrang 88 der Windenergieanlage 80. Das Getriebe 85 verfügt über ein Gehäuse 70, das mindestens eine Gehäusekomponente 10 umfasst. Die Gehäusekomponente 10 ist gemäß einer Ausführungsform der vorliegenden Erfindung ausgebildet.

## Patentansprüche

1. Gehäusekomponente (10), umfassend einen Flansch (12) zur Herstellung einer Flanschverbindung (35), **dadurch gekennzeichnet, dass** auf einer Stirnfläche (14) des Flansches (12) jeweils in einem ersten und einem zweiten Bereich (20, 30) eine Mehrzahl an Mikrostrukturen (40) zu einer Erhöhung eines lokalen Reibwerts ausgebildet ist, wobei die Mikrostrukturen (40) jeweils eine Messerform (42) mit einer Schneidlinie (44) aufweisen, wobei die Schneidlinien (44) im ersten Bereich (20) konzentrisch um einen ersten Lokalmittelpunkt (22) angeordnet sind, und die Schneidlinien (44) im zweiten Bereich (30) konzentrisch um einen zweiten Lokalmittelpunkt (32) angeordnet sind, wobei der erste und zweite Lokalmittelpunkt (22, 32) zu einem Flanschmittelpunkt (15) unterschiedliche Radialabstände (24,34) aufweisen.

2. Gehäusekomponente (10) nach Anspruch 1, **dadurch gekennzeichnet, dass** die Mikrostrukturen (40) zumindest teilweise als Drehriefen ausgebildet sind und/oder durch Laserbearbeitung hergestellt sind.

3. Gehäusekomponente (10) nach Anspruch 1 oder 2, **dadurch gekennzeichnet, dass** die Messerform (42) einen dreieckigen, einen trapezförmigen oder einen trapezoidförmigen Querschnitt (45, 47, 49) aufweist.

4. Gehäusekomponente (10) nach einem der Ansprüche 1 bis 3, **dadurch gekennzeichnet, dass** die Schneidlinien (44) der Mikrostrukturen (40) im ersten und/oder zweiten Bereich (20, 30) quer zu einer mechanischen Spannung (41) und/oder einer Vergleichsspannung (48) an der Stirnfläche (14) des Flansches (12) ausgerichtet ist.

5. Gehäusekomponente (10) Anspruch 4, **dadurch gekennzeichnet, dass** die mechanische Spannung (41) als Schubspannung (46) ausgebildet ist, die im Betrieb hervorgerufen wird.

6. Gehäusekomponente (10) nach Anspruch 4 oder 5, **dadurch gekennzeichnet, dass** im ersten und/oder zweiten Bereich (20, 30) im Betrieb eine maximale mechanische Spannung (41) vorliegt, die höher ist als ein wählbarer Schwellenwert.

7. Gehäusekomponente (10) nach einem der Ansprüche 1 bis 6, **dadurch gekennzeichnet, dass** der erste und/oder zweite Bereich (20, 30) an einem Übergang (28) zu einer Drehmomentstütze (25) angeordnet ist.

8. Verfahren (100) zur Herstellung einer Gehäusekomponente (10), die einen Flansch (12) mit einer Stirnfläche (14) aufweist, umfassend die Schritte:
a) Bereitstellen einer Gehäusekomponente (10) mit spanend zu bearbeitender Stirnfläche (14) des Flansches (12);
b) Positionieren eines Fräsers (55) an einem ersten Lokalmittelpunkt (22);
c) Spanendes Bearbeiten der Stirnfläche (14) zum Erzeugen von Mikrostrukturen (40);
d) Bewegen des Fräsers (55) vom ersten Lokalmittelpunkt (22) zu einem zweiten Lokalmittelpunkt (32) unter spanender Bearbeitung;
wobei das Bewegen im Schritt d) eine Bewegung in einer Umfangsbearbeitungsrichtung (18) und eine Bewegung in einer Radialbearbeitungsrichtung (19) umfasst.

9. Verfahren (100) nach Anspruch 8, **dadurch gekennzeichnet, dass** die Mikrostrukturen (40) als Drehriefen ausgebildet sind.

10. Verfahren (100) nach Anspruch 8 oder 9, **dadurch gekennzeichnet, dass** der Fräser (55) einen Fräserdurchmesser aufweist, der eine Flanschbreite übersteigt.

11. Verfahren (100) nach einem der Ansprüche 8 bis 10, **dadurch gekennzeichnet, dass** der erste und/oder zweite Lokalmittelpunkt (22, 32) radial außerhalb der Stirnfläche (14) des Flansches (12) liegen.

12. Gehäuse (70), umfassend eine erste und eine zweite Gehäusekomponente (10), die über eine Flanschverbindung (35) miteinander verbunden sind, **dadurch gekennzeichnet, dass** die erste und/oder zweite Gehäusekomponente (10) jeweils nach einem der Ansprüche 1 bis 7 ausgebildet ist.

13. Gehäuse (70) nach Anspruch 12, **dadurch gekennzeichnet, dass** die Schneidlinien (44) der Mikrostrukturen (40) auf den Stirnflächen (14) in einem Verstärkungsbereich (51) zueinander parallel angeordnet sind.

14. Gehäuse (70) nach einem der Ansprüche 12 oder 13, **dadurch gekennzeichnet, dass** die erste Gehäusekomponente (10) aus einem härteren Werkstoff hergestellt ist als die zweite Gehäusekomponente (10) und die Mikrostrukturen (40) der ersten Gehäusekomponente (10) eine höhere Rauigkeit aufweisen als die Mikrostrukturen (40) der zweiten Gehäusekomponente (10) .

15. Planetengetriebe (85), umfassend ein Gehäuse (70) mit einer ersten Gehäusekomponente (10), in der ein Hohlrad aufgenommen ist, in dem mindestens ein Planetenrad drehbar angeordnet ist, **dadurch gekennzeichnet, dass** die erste Gehäusekomponente (10) nach einem der Ansprüche 1 bis 7 ausgebildet ist.

16. Windenergieanlage (80), umfassend einen Rotor (82), der mit einer Gondel (84) verbunden ist, wobei der Rotor (82) zum Antrieb eines Generators (86) mit einem Planetengetriebe (85) drehmomentübertragend gekoppelt ist, **dadurch gekennzeichnet, dass** das Planetengetriebe (85) nach Anspruch 15 ausgebildet ist.

## Claims

1. Housing component (10) comprising a flange (12) for creating a flange connection (35), **characterised in that** a plurality of microstructures (40) are formed in each of a first and a second region (20, 30) on an end face (14) of the flange (12) in order to increase a local friction coefficient, wherein the microstructures (40) have in each case a blade shape (42) with a cutting line (44), wherein the cutting lines (44) in the first region (20) are arranged concentrically about a first local centre point (22) and the cutting lines (44) in the second region (30) are arranged concentrically about a second local centre point (32), wherein the first and second local centre points (22, 32) have different radial distances (24, 34) from a flange centre point (15).

2. Housing component (10) according to claim 1, **characterised in that** the microstructures (40) are at least partly formed as rotation bands and/or produced by laser processing.

3. Housing component (10) according to claim 1 or 2, **characterised in that** the blade shape (42) has a cross-section (45, 47, 49) in the shape of a triangle, a trapezium or a trapezoid.

4. Housing component (10) according to one of claims 1 to 3, **characterised in that** the cutting lines (44) of the microstructures (40) in the first and/or second region (20, 30) are aligned transversely relative to a mechanical stress (41) and/or an equivalent stress (48) at the end face (14) of the flange (12).

5. Housing component (10) according to claim 4, **characterised in that** the mechanical stress (41) takes the form of a shear stress (46) which is produced during operation.

6. Housing component (10) according to claim 4 or 5, **characterised in that** a maximum mechanical stress (41) which is higher than a selectable threshold value is present in the first and/or second region (20, 30) during operation.

7. Housing component (10) according to one of claims 1 to 6, **characterised in that** the first and/or second region (20, 30) is arranged at a transition zone (28) to a torque bracket (25) .

8. Method (100) for producing a housing component (10) which has a flange (12) with an end face (14), comprising the steps:
a) providing a housing component (10) whose flange (12) has an end face (14) that is to be machined;
b) positioning a milling cutter (55) at a first local centre point (22);
c) machining the end face (14) in order to create microstructures (40);
d) moving the milling cutter (55) from the first local centre point (22) to a second local centre point (32) while machining;
wherein the movement in step d) comprises movement in a circumferential processing direction (18) and movement in a radial processing direction (19).

9. Method (100) according to claim 8, **characterised in that** the microstructures (40) are formed as rotation bands.

10. Method (100) according to claim 8 or 9, **characterised in that** the milling cutter (55) has a cutting diameter which exceeds a flange width.

11. Method (100) according to one of claims 8 to 10, **characterised in that** the first and/or second local centre point (22, 32) lies radially outside the end face (14) of the flange (12).

12. Housing (70) comprising a first and a second housing component (10) which are interconnected via a flange connection (35), **characterised in that** the first and/or second housing component (10) in each case is formed according to one of claims 1 to 7.

13. Housing (70) according to claim 12, **characterised in that** the cutting lines (44) of the microstructures (40) on the end faces (14) are arranged parallel to each other in a reinforcing region (51).

14. Housing (70) according to one of claims 12 or 13, **characterised in that** the first housing component (10) is made from a harder material than the second housing component (10) and the microstructures (40) of the first housing component (10) have a greater roughness than the microstructures (40) of the second housing component (10).

15. Planetary gear set (85) comprising a housing (70) with a first housing component (10) that accommodates a ring gear in which at least one planetary gear is rotatably arranged, **characterised in that** the first housing component (10) is formed according to one of claims 1 to 7.

16. Wind power installation (80) comprising a rotor (82) which is connected to a nacelle (84), wherein the rotor (82) is coupled in a torque transferring manner to a planetary gear set (85) in order to drive a generator (86), **characterised in that** the planetary gear set (85) is formed according to claim 15.

## Revendications

1. Composant (10) de boîtier, comprenant une bride (12) pour obtenir un bridage (35), **caractérisé en ce que**, sur une surface (14) frontale de la bride (12), est constitué, respectivement dans une première région et dans une deuxième région (20, 30), une pluralité de microstructures (40) pour augmenter un coefficient de frottement local, les microstructures (40) ayant chacune la forme (42) d'un couteau ayant une ligne (44) de coupure,
dans lequel les lignes (44) de coupure sont disposées dans la première région (20) concentriquement autour d'un premier centre (22) local et les lignes (44) de coupure sont disposées dans la deuxième région (30) concentriquement autour d'un deuxième centre (32) local, le premier et le deuxième centres (22, 32) locaux ayant des distances (24, 34) radiales différentes à un centre (15) de la bride.

2. Composant (10) de boîtier suivant la revendication 1, **caractérisé en ce que** les microstructures (40) sont constituées, au moins en partie, sous la forme de rainures par tournage et/ou sont produites par usinage laser.

3. Composant (10) de boîtier suivant la revendication 1 ou 2, **caractérisé en ce que** la forme (42) en couteau a une section (45, 47, 49) transversale triangulaire, trapézoïdale ou en forme de trapézoïde.

4. Composant (10) de boîtier suivant l'une des revendications 1 à 3, **caractérisé en ce que** les lignes (44) de coupure des microstructures (40), dans la première et/ou la deuxième régions (20, 30), sont dirigées transversalement à une tension (41) mécanique et/ou à une contrainte (41) mécanique et/ou à une contrainte (48) de référence sur la surface (14 ) frontale de la bride (12).

5. Composant (10) de boîtier suivant la revendication 4, **caractérisé en ce que** la contrainte (41) mécanique est constituée sous la forme d'une contrainte (46) de cisaillement provoquée en fonctionnement.

6. Composant (10) de boîtier suivant la revendication 4 ou 5, **caractérisé en ce qu'**il y a, dans la première et/ou la deuxième région (20, 30) en fonctionnement, une contrainte (41) mécanique maximum, qui est plus grande qu'une valeur de seuil pouvant être choisie.

7. Composant (10) de boîtier suivant l'une des revendications 1 à 6, **caractérisé en ce que** la première et/ou la deuxième région (20, 30) est disposée à une transition (28) à un bras (25) de couple.

8. Procédé (100) de fabrication d'un composant (10) de boîtier, qui a une bride (12) ayant une surface (14) frontale, comprenant les stades :
a) on se procure un composant (10) de boîtier ayant une surface (14) frontale, à usiner avec enlèvement de copeaux, de la bride (12) ;
b) on met une fraise (55) en un premier centre (22) local ;
c) on usine avec enlèvement de copeaux la surface (14) frontale pour produire des microstructures (40) ;
d) on déplace la fraise (55) du premier centre (22) local à un deuxième centre (32) local avec usinage avec enlèvement de copeaux ;
dans lequel le déplacement au stade d) comprend un déplacement dans une direction (18) d'usinage périphérique et un déplacement dans une direction (19) d'usinage radiale.

9. Procédé (100) suivant la revendication 8, **caractérisé en ce que** les microstructures (40) sont constituées sous la forme de rainures par tournage.

10. Procédé (100) suivant la revendication 8 ou 9, **caractérisé en ce que** la fraise (55) a un diamètre, qui dépasse une largeur de la bride.

11. Procédé (100) suivant l'une des revendications 8 à 10, **caractérisé en ce que** le premier et/ou le deuxième centre (22, 32) local se trouve radialement à l'extérieur de la surface (14) frontale de la bride (12).

12. Boîtier (70), comprenant un premier et un deuxième composants (10) de boîtier, qui sont reliés l'un à l'autre par un bridage (35), **caractérisé en ce que** le premier et/ou le deuxième composants (10) du boîtier est constitué, respectivement, suivant l'une des revendications 1 à 7.

13. Boîtier (70) suivant la revendication 12, **caractérisé en ce que** les lignes (44) de coupure des microstructures (40) sont disposées en étant parallèles entre elles sur les surfaces (14) frontales dans une région (51) de renfort.

14. Boîtier (70) suivant l'une des revendications 12 ou 13, **caractérisé en ce que** le premier composant (10) du boîtier est fabriqué en un matériau plus dur que le deuxième composant (10) du boîtier et les microstructures (40) du premier composant (10) du boîtier ont une rugosité plus grande que les microstructures (40) du deuxième composant (10) du boîtier.

15. Engrenage (85) épicycloïdal, comprenant un carter (70) ayant un premier composant (10) de carter, dans lequel est reçue une roue à denture intérieure, dans laquelle est montée tournante au moins une roue satellite, **caractérisé en ce que** le premier composant (10) du carter est constitué suivant l'une des revendications 1 à 7.

16. Eolienne (80), comprenant un rotor (82), qui est relié à une nacelle (84), le rotor (82) étant, pour l'entraînement d'une génératrice (86), accouplé avec transmission de couple à un engrenage (85) épicycloïdal, **caractérisé en ce que** l'engrenage (85) épicycloïdal est constitué suivant la revendication 15.
